# EUROPEAN PATENT SPECIFICATION

(11) **EP 1 172 285 B1**
(45) Date of publication and mention of the grant of the patent: **15.03.2006**
(21) Application number: 01850122.1
(22) Date of filing: 09.07.2001
(51) Int. Cl.: B62D 51/02, B62B 3/06

(54) **Device at travel platform of industial truck**
Vorrichtung für eine Laufplattform eines Förderfahrzeugs
Dispositif pour plate-forme de transport d'un chariot de manutention

(30) Priority: 13.07.2000 SE 0002671
(43) Date of publication of application: 16.01.2002
(73) Proprietor: BT Industries Aktiebolag, S-59581 Mjölby (SE)
(72) Inventor: Olsson, Fredrik, 593 30 Västervik (SE); Elsmark, Lars, 131 34 Nacka (SE)
(74) Representative: Berglund, Erik Wilhelm

(56) References cited:
- EP-A- 0 485 257
- DE-A- 19 601 374
- US-A- 5 575 140
- US-A- 5 579 859

## Description

The invention concerns a device at a travel platform of an industrial truck in accordance to the preamble of claim 1.

### Prior art

Today small by electrical motors driven industrial trucks where the operator walkingly maneuvers the truck by means of a tiller are usual on the market. In order to facilitate the work of the operator for longer transport distances it is usual to arrange a foldable travel platform on the chassi of the truck. The operator can then unfold the platform and ride on the truck on these occasions and then has the possible simply to fold this for instance at loading and unloading situations.

At some applications the travel platform is supported resiliently for improved comfort. Since the platform is fastened to a pivot axle in its inner end at the truck chassi this means that springing is also arranged close to this axle. This brings two areas of problem. To start with this means that the movements becomes a circular movement around the axle of mounting which means a great difference in springing distance between the outer and inner part of the platform which can be found very uncomfortable. Secondly it is difficult to dimension the springs so that the comfort properties become the same for light as well as heavy operators, furthermore the platform may quickly become inclined along with the wear of the springs.

It is not quite simple to overcome these problems since the cost issue is of utmost importance for these comparatively simple trucks that have greater difficulties to carry these extra costs in relation to the bigger machines. On these smaller truck also the space question is a big problem.

A device for an industrial truck according the preamble of claim 1 is known from US 5579859.

### Object of the invention

The object of the invention is to achieve a device at a travel platform of an industrial truck that provide comfortable travel properties and that is low cost, simple and only requiring a small space.

The object of the invention is achieved with a device in accordance to the characterizing clause of claim 1. By journaling the travel platform at link means having a journal location at the chassi as far from the platform as possible the greatest possible radius for the movement is achieved which is therefor experience as vertical. Furthermore the springs can be located so that the dimensioning is simplified and there useful life can be extended.

Claim 2 provides a solution that causes the movements of the travel platform and the link means to coincide when the operator is standing on the platform but enables the folding of the platform towards a rest position when it is not used. With a further development in accordance with claim 6 an automatic folding is enabled when the driver steps down from the platform.

The claims 3 and 4 defines advantageous dimensioning of the device in order to achieve the best possible spring travel and spring conditions, since the relationship between spring force and spring travel becomes smaller (which is advantageous from the point of choosing springs and spring dimensioning) the further from the journaling point that the spring means is located.

A device accordance with claim 5 where the link means includes a link arm on each side of the a driving unit provides a space efficient solution that at the same time is stable and tough.

Further features and advantages of the invention are apparent from the below described preferred embodiment with reference to the enclosed drawings.

### Description of the figures.

Fig 1 shows a view of a tiller truck with a folding platform.
Fig 2 shows a schematic view of the device in accordance with the invention seen from above.
Fig 3 shows schematic view of the device in accordance of the invention seen from the side.

### Description of embodiment.

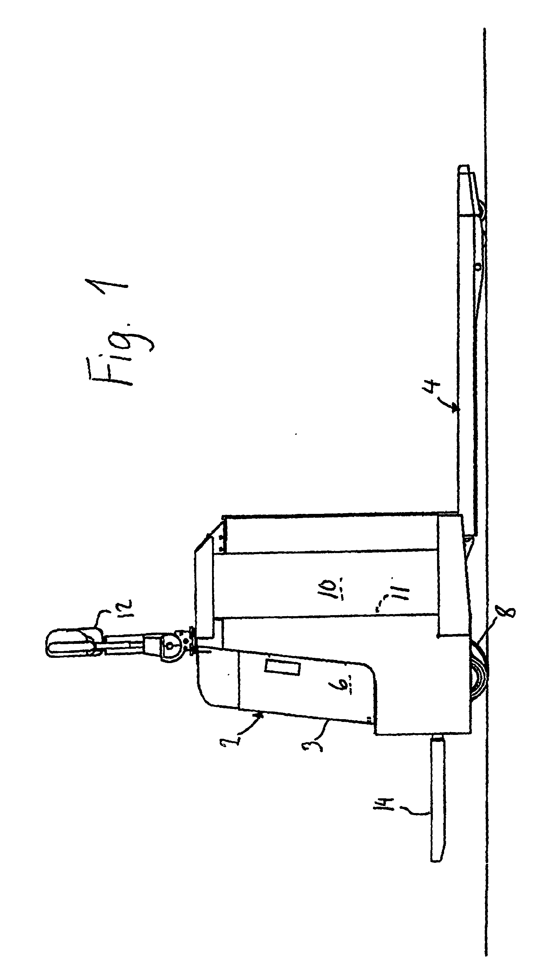

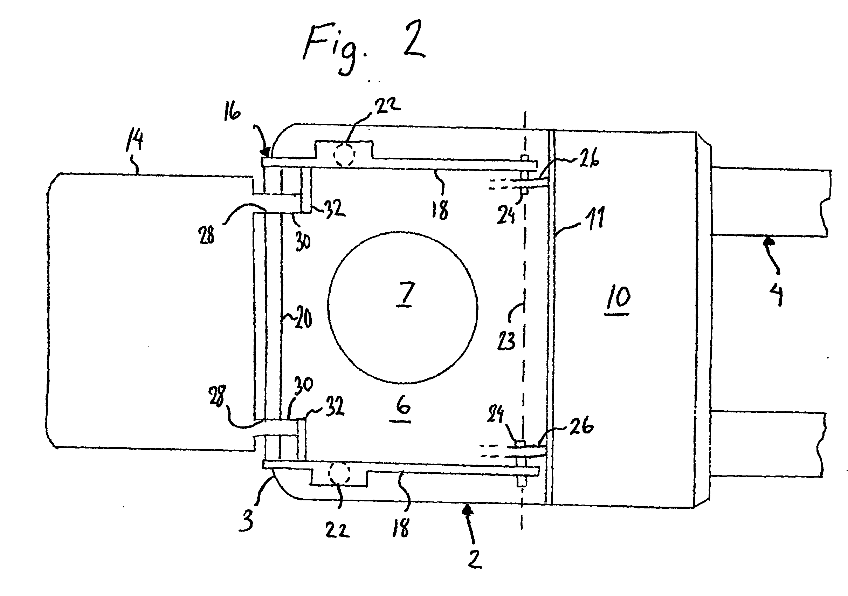

Fig 1 shows an electric motor driven industrial truck including a chassi 2 and a load supporting part 4 here in the shape of a pair of load forks. The normal travel direction of the truck is to the left in fig 1, at which the operator thus walks ahead of the truck with the load forks 4 and the load in the rear. The chassi 2 thus includes a front end 3 behind which a space 6 for among other things a driving unit 7 (see fig 2) is arranged and connected to drive wheel 8.

The operator maneuvers the truck by means of a tiller 12. Behind the space 6 a battery space 10 is located separated by a partition 11 (see fig 2). The operator can for instance during longer travel distances choose to ride on the truck by simply standing on a travel platform 14. The platform 14 is foldable towards a vertical rest position against the chassi 2. The platform 14 is held folded when the operator wants to handle the truck walking, for instance at loading and unloading of goods.

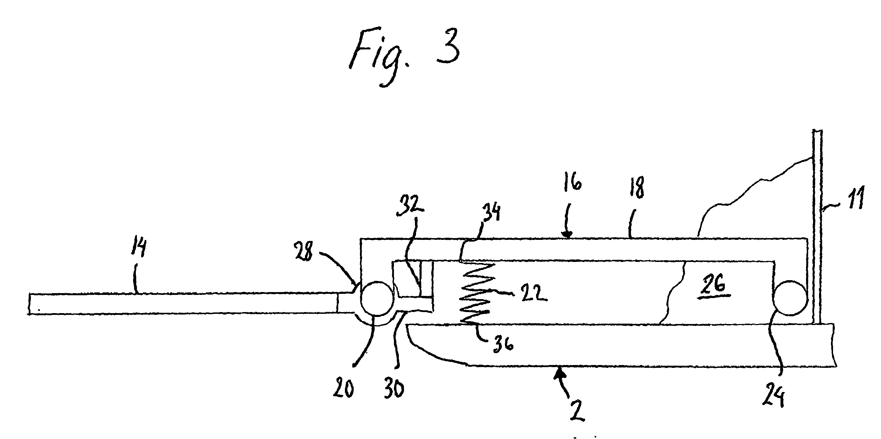

The above described general arrangement constitute known technique and is not a part of this invention that is centered on how the platform 14 is arranged at the truck, which is described in greater detail below with reference in particular to the figures 2 and 3.

The travel platform 14 is pivotally journaled to a the link means 16 in accordance with the invention. The link means includes two link arms 18 which are pivotally journaled to the chassi 2 close to the battery space 10 at the partition 11. The link arms 18 are journaled around an essentially horizontal axis 23 extending across the truck, here in the shape of a respective pivot pin 24 in the panel 26 fastened to a chassi panel. The link arms 18 are situated on each side of the drive unit 7 and extends essentially horizontally forward and are in the vicinity of the front chassi end 3 connected to each other with a crossbar 20. The link arms 18 are also resiliently journaled to the chassi via respective spring means 22, preferably a helical spring, fastened between a fastening point 34 at the front end of the link arm and a fastening point 36 in the chassi 2.

The travel platform 14 is pivotally journaled to the link means 16 via a second horizontal axle in transverse direction of the truck and constituted by the cross bar 20. The travel platform has two journal points 28 situated close to each link arm 18. A mechanical stop means is arranged to prevent the travel platform from pivoting further down in relation to the link means 16 than the end position shown in the figures. This mechanical stop means includes an extending pin 30 close to the journal positions 28 of the travelled platform 14, which pins 30 cooperate with respective stop protrusions 32 of the link arms 18.

By this arrangement the platform 14 functions as a direct extension of the link means 16 since relative movement between them is prevented. The mechanical stop means 30, 32 prevents a relative movement in one direction while the weight of the operator prevents moment in the other direction. This means in turn that the entire platform 14 receives a pivot movement centered around the first axle 23 which movement is experienced as considerably more vertical due to the long arm.

When the operator no longer wish to travel on the platform 14, for instance in loading and unloading situations it can easily be folded up against the chassi by pivoting around the cross bar 20. The operator can do this with this foot or it may take place automaticly by means of spring pretension, then preferably with a gas spring (this principal is in itself known and exist today on platform arrangements). The spring must then of course be dimensioned so that the weight of the operator without problems can outweigh the spring force at the use of the platform 14.

The link means 16 and its springing and journaling and the platform 14 and its journaling are preferably so dimensioned that the platform 14 has a horizontal position when it is carrying an average operator, for instance with a weight of 85 kilos. It is also desirable that the platform 14 then is positioned in the horizontal plane of the first axle of 23 or close to this. This means that the platform can be inclined slightly outward, upward in an unloaded position and somewhat outward downward when it is carrying heavier operator. Since the maximal movement at the front edge of the platform 14 only should be a few centimeters with the distance therefrom to the axle 23 being around 80cm this means that the differences in inclination depending on the weight of the operator may be considered as negligible.

By placing the springs 22 close to the front chassi end 3 they will be located as far from the pivot axle 23 as possible providing a small ratio between spring force and spring distance which simplifies choice of springs and dimensioning thereof.

In accordance with the invention we have chosen the partition 11 as the rear possible limit for the placing of the axle 23. Purely theoretically it would be possible to change the shape of the truck and to achieve an even longer arm. This would however require substantial reconstructions of for instance battery lay out and would probably result in a clearly more expensive truck. Furthermore it is important that the truck is maintained as compact as possible of for instance reasons of maneuverability.

The invention can within the frame of the patent claims be executed in a number of alternative embodiments other then the one shown above. Thus one can vary the shape of link means and springs with maintained inventive thought, namely the achievement of a long arm for the springing of a loaded platform by a pivot axle far from the platform and second pivot axle for the folding close to the end of the chassi.

## Claims

1. Device for an industrial truck, including a chassis (2) and a load taking part (4) a travel platform (14) situated at the front chassis end (3) at the end of the chassis (2) facing away from the load taking part (4), a battery space (10) arranged at the part of the chassis (2) facing the load taking part (4), **characterized in that** a link means (16) is pivotally journaled in the chassis (2) on a first horizontal axle (23), which link means (16) extends essentially horizontally from the load taking part (4) towards the front chassi end (3), that the travel platform (14) is pivotally journaled to the link means (16) on a second horizontal axle (20), that the first horizontal axle (23) extends crosswise of the truck and is located close to the battery space (10), and that the second horizontal axle (20) extends crosswise of the truck and is situated close to the front chassiSend (3) and that the link means (16) is springingly journaled to the chassis (2).

2. Device according to claim 1, **characterized in that** the travel platform (14) is so journaled to the link means (16) that a mechanical stop means prevent pivot movement of the travel platform (14) in relation to the link means (16) past an end position, which end position corresponds to an essentially horizontal travel platform (14) when this is subjected to the weight of an operator.

3. Device according to claim 1 or 2, **characterized in that** at least one spring means (22) is arranged between a link means (16) and the chassis (2) close to the front end of the chassi (3) .

4. Device according to claim 3, **characterized in that** the link means (16) and its springing and journaling as well as the travel platform (14) and its journaling are so dimensioned that the travel platform (14) is essentially horizontal and, preferably in the same plane as the first horizontal axle (23), when the travel platform (14) is subjected to the weight of an operator.

5. Device according to any of the claims 1 - 4, **characterized in that** the link means (16) includes two link arms (18) situated on each side of a drive unit (7) where each link arm (18) is journaled to the chassis (2) close to the battery space (10) and with the spring means (22) close to the front end (3) of the chassi, which link arms (18) are connected with a cross bar (20) on which the travel platform (14) is journaled.

6. Device according to any of the claims 1 - 5, **characterized in that** the travel platform (14) is connected to the link means (16) via a pretension means (not shown), preferably a gas spring, that act on the platform (14) towards an essentially vertically folded position.

## Revendications

1. Dispositif pour un chariot de manutention, incluant un châssis (2) et une partie de réception de charge (4), une plate-forme de déplacement (14) située sur l'extrémité de châssis avant (3) à l'extrémité du châssis (2) dirigée à l'opposé de la partie de réception de charge (4), un espace de batterie (10) agencé sur la partie du châssis (2) dirigée vers la partie de réception de charge (4), **caractérisé en ce que** des moyens de liaison (16) sont tourillonnés de manière pivotante dans le châssis (2) sur un premier axe horizontal (23), lesquels moyens de liaison (16) s'étendent de manière sensiblement horizontale à partir de la partie de réception de charge (4) en direction de l'extrémité de châssis avant (3), **en ce que** la plate-forme de déplacement (14) est tourillonnée de manière pivotante sur les moyens de liaison (16) sur un second axe horizontal (20), **en ce que** le premier axe horizontal (23) s'étend transversalement au chariot et est positionné près de l'espace de batterie (10), et **en ce que** le second axe horizontal (20) s'étend transversalement au chariot et est situé près de l'extrémité de châssis avant (3) et **en ce que** les moyens de liaison (16) sont tourillonnés de manière élastique sur le châssis (2).

2. Dispositif selon la revendication 1, **caractérisé en ce que** la plate-forme de déplacement (14) est tourillonnée sur les moyens de liaison (16) de sorte que des moyens de butée mécanique empêchent un mouvement de pivotement de la plate-forme de déplacement (14) par rapport aux moyens de liaison (16) au-delà d'une position finale, laquelle position finale correspond à une plate-forme de déplacement (14) essentiellement horizontale lorsqu'elle est soumise au poids d'un opérateur.

3. Dispositif selon la revendication 1 ou 2, **caractérisé en ce qu'**au moins un moyen formant ressort (22) est agencé entre des moyens de liaison (16) et le châssis (2) près de l'extrémité avant du châssis (3).

4. Dispositif selon la revendication 3, **caractérisé en ce que** les moyens de liaison (16) et leur suspension à ressort et leur tourillonnement ainsi que la plate-forme de déplacement (14) et son tourillonnement sont dimensionnés de sorte que la plate-forme de déplacement (14) est essentiellement horizontale et, de préférence dans le même plan que le premier axe horizontal (23), lorsque la plate-forme de déplacement (14) est soumise au poids d'un opérateur.

5. Dispositif selon l'une quelconque des revendications 1 à 4, **caractérisé en ce que** les moyens de liaison (16) incluent deux bras de liaison (18) situés de chaque côté d'une unité d'entraînement (7) où chaque bras de liaison (18) est tourillonné sur le châssis (2) près de l'espace de batterie (10) et en ayant le moyen formant ressort (22) près de l'extrémité avant (3) du châssis, lesquels bras de liaison (18) sont reliés par une barre transversale (20) sur laquelle la plate-forme de déplacement (14) est tourillonnée.

6. Dispositif selon l'une quelconque des revendications 1 à 5, **caractérisé en ce que** la plate-forme de déplacement (14) est reliée aux moyens de liaison (16) par l'intermédiaire de moyens de précontrainte (non-représentés), de préférence un ressort à gaz, qui agissent sur la plate-forme (14) en direction d'une position repliée de manière essentiellement verticale.

## Patentansprüche

1. Vorrichtung für ein Flurförderzeug, welches ein Fahrgestell (2) und ein lastaufnehmendes Teil (4), eine Laufplattform (14), welche an dem vorderseitigen Fahrgestellende (3) an dem Ende des Fahrgestells (2) liegt, die von dem lastaufnehmenden Teil (4) abgewandt liegt und einen Batterieraum (10) umfasst, welcher an dem Teil des Fahrgestells (2) angeordnet ist, welches dem lastaufnehmenden Teil (4) zugewandt liegt, **dadurch gekennzeichnet, dass** eine Verbindungseinrichtung (16) schwenkbeweglich am Fahrgestell (2) um eine erste, horizontale Achse (23) gelagert ist, die Verbindungseinrichtung (16) um den lastaufnehmenden Teil (4) in Richtung zu dem vorderen(3) Ende des Fahrgestells (2) im wesentlichen horizontal verläuft, die Laufplattform (10) schenkbeweglich an der Verbindungseinrichtung (16) um eine zweite horizontale Achse (20) gelagert ist, die erste horizontale Achse (23) in Querrichtung zu dem Flurförderzeug verläuft und in der Nähe des Batterieraums liegt, und dass die zweite horizontale Achse (20) in Querrichtung des Flurförderzeugs verläuft und in der Nähe des vorderen Fahrgestellendes (3) liegt, und die Verbindungseinrichtung (16) federnd am Fahrgestell (2) gelagert ist.

2. Vorrichtung nach Anspruch 1, **dadurch gekennzeichnet, dass** die Laufplattform (14) gelenkig mit der Verbindungseinrichtung (16) derart verbunden ist, dass eine mechanische Anschlageinrichtung eine Schwenkbewegung der Laufplattform (14) relativ zu der Verbindungseinrichtung (16) an einer Endposition vorbei verhindert, wobei die Endposition einer im wesentlichen horizontalen Laufplattform (14) zugeordnet ist, wenn diese mit dem Gewicht einer Bedienungsperson beaufschlagt ist.

3. Vorrichtung nach Anspruch 1 oder 2, **dadurch gekennzeichnet, dass** wenigstens eine Federeinrichtung (22) zwischen einer Verbindungseinrichtung (16) und dem Fahrgestell (2) nahe an dem vorderen Ende (3) des Fahrgestells (2) angeordnet ist.

4. Vorrichtung nach Anspruch 3, **dadurch gekennzeichnet, dass** die Verbindungseinrichtung (16) und die Federung sowie die Lagerung als auch die Laufplattform (14) und die Lagerung derselben derart dimensioniert sind, dass die Laufplattform (14) im wesentlichen horizontal und vorzugsweise in ein und derselben Ebene wie die erste horizontale Achse (23) ist, wenn die Laufplattform (14) durch das Gewicht einer Bedienungsperson beaufschlagt ist.

5. Vorrichtung nach einem der Ansprüche 1 bis 4, **dadurch gekennzeichnet, dass** die Verbindungseinrichtung (16) zwei Verbindungsarme (18) umfaßt, welche auf jeder Seite der Antriebseinheit (7) liegen, jeder Verbindungsarm (18) an dem Fahrgestell (2) in der Nähe des Batterieraumes (10) gelagert ist, die Federeinrichtung (22) in der Nähe des vorderen Endes (3) des Fahrgestells (2) liegt, und dass die Verbindungsarme (18) mit einem Querteil (20) verbunden sind, an welchem die Laufplattform (14) gelagert ist.

6. Vorrichtung nach einem der Ansprüche 1 bis 5, **dadurch gekennzeichnet, dass** die Laufplattform (10) mit der Verbindungseinrichtung (16) über eine Vorbelastungseinrichtung (nicht gezeigt), vorzugsweise eine Gasfeder, verbunden ist, welche die Laufplattform (14) in Richtung in einer im wesentlichen vertikalen eingefahrenen Position beaufschlagt.
